(19) Europäisches Patentamt / European Patent Office / Office européen des brevets

(11) **EP 2 745 310 B1**

(12) **EUROPEAN PATENT SPECIFICATION**

(45) Date of publication and mention
of the grant of the patent:
**06.05.2020 Bulletin 2020/19**

(21) Application number: **12825373.9**

(22) Date of filing: **17.08.2012**

(51) Int Cl.:
*F04B 49/06* (2006.01)    *F04B 53/06* (2006.01)
*F04B 13/00* (2006.01)    *G05D 7/06* (2006.01)
*G05D 9/12* (2006.01)

(86) International application number:
**PCT/US2012/051413**

(87) International publication number:
**WO 2013/028542 (28.02.2013 Gazette 2013/09)**

(54) **SYSTEM AND METHOD FOR DETECTING AIR IN A FLUID**

SYSTEM UND VERFAHREN ZUM NACHWEIS VON LUFT IN EINER FLÜSSIGKEIT

SYSTÈME ET PROCÉDÉ POUR DÉTECTER LA PRÉSENCE D'AIR DANS UN FLUIDE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **19.08.2011  US 201161525594 P
25.05.2012  US 201261651978 P**

(43) Date of publication of application:
**25.06.2014 Bulletin 2014/26**

(73) Proprietor: **Entegris, Inc.
Billerica, MA 01821-4600 (US)**

(72) Inventors:
• **BATCHELDER, Traci, L.
Austin, TX 78750 (US)**
• **CEDRONE, James
Braintree, MA 02184 (US)**

(74) Representative: **Greaves Brewster LLP
Copa House
Station Road
Cheddar, Somerset BS27 3AH (GB)**

(56) References cited:
**WO-A2-2004/010474    WO-A2-2009/033106
US-A- 6 112 605       US-A1- 2003 113 440
US-A1- 2010 154 398   US-B1- 6 302 653
US-B1- 6 413 238      US-B1- 6 485 263**

**Description**

TECHNICAL FIELD

This disclosure relates generally to pumping systems used in semiconductor manufacturing processes and, more particularly, to new ways of detecting air or gas in such pumping systems.

BACKGROUND OF THE RELATED ART

US2003/113440 A1 discloses how a processing solution is supplied from processing-solution suppliers onto the surfaces of targets to be processed while a flow rate of the processing solution is being adjusted. The processing solution is fed from a processing-solution supply source at a specific pressure via a processing-solution pressure-up feeder. The pressure of the processing solution fed via the processing-solution pressure-up feeder is adjust to another specific pressure or more at least when the processing-solution suppliers are operating simultaneously. A flow-rate detector detects the flow rate of the processing solution supplied from each processing-solution supplier. A pressure detector detects the pressure of the processing solution fed via the processing-solution pressure-up feeder. The flow-rate adjuster and the pressure adjuster are controlled based on prestored control data and detection signals from the flow-rate detector and the pressure detector so that the same amount of processing solution is supplied to the targets from the processing-solution suppliers.

WO2009/033106 A2 discloses a product dispensing system which includes a flow control device configured to regulate a first ingredient. A pump module is configured to be coupled to a supply of a second ingredient. A controller is configured to provide a first control signal to the flow control device for controlling the supply of a first quantity of the first ingredient based upon, at least in part, a predetermined recipe. The controller is further configured to provide a second control signal to the pump module for controlling the supply of a first quantity of the second ingredient based upon, at least in part, the predetermined recipe.

WO2004/010474 A2 discloses an apparatus and a control system for monitoring (preferably digitally) and/or controlling pressure to a pneumatic load such as a proportional fluid control valve and using a measurement input from a fluid measurement device that responds to a flow rate, the liquid measurement input being used to control the' pressure to the pneumatic load so that pneumatic load may be increased or decreased (to proportionally open or close the pneumatic valve) to change the flow rate of the fluid to a desired rate. The pneumatic load can also be adjusted (to proportionally open or close the pneumatic valve) to accommodate changes in temperature and viscosity of a fluid.

There are many applications for which precise control over the amount and/or rate at which a fluid is dispensed by a pumping apparatus is necessary. In semiconductor processing, for example, it is important to control the amount and rate at which photochemicals, such as photoresist chemicals, are applied to a semiconductor wafer. The coatings applied to semiconductor wafers during processing typically require a flatness across the surface of the wafer that is measured in angstroms. The rates at which processing chemicals, such as photoresists chemicals, are applied to the wafer have to be controlled in order to ensure that the processing liquid is applied uniformly.

Many photochemicals used in the semiconductor industry today are liquids that are very expensive, frequently costing as much as $1000 a liter. Therefore, it is preferable to ensure that a minimum but adequate amount of chemical is used and that the chemical is not damaged by the pumping apparatus. Several conditions, however, can cause the wrong amount of liquid to be dispensed on a wafer, leading to lost liquid and scrap wafers.

One condition that can result in an improper liquid dispense is air in the dispense pump or downstream tubing. Existing systems undergo lengthy priming routines to ensure that air is removed from a pump before the pump is used to dispense fluid to a wafer. However, such systems assume the priming routine was successful and do not account for air introduced after priming. Several existing systems also monitor a pump's dispense cycles to determine whether a dispense was a "good" dispense. While such systems give a qualitative assessment of a dispense and generate an alert before a series of "bad" dispense occurs, they do not prevent the initial "bad" dispense from occurring nor do they provide a quantitate assessment of the amount of air in a system. Furthermore, such systems may have difficulty detecting a bad dispense when the bad dispense is caused by air that is a relatively great distance (greater than 0.5 meters) away from the pump outlet.

SUMMARY OF DISCLOSURE

The present invention is defined by a pumping system according to claim 1 and a method for detecting air in a pumping system according to claim 8. The dependent claims define embodiments of the invention.

In embodiments where the starting and ending pressures may be preselected, a difference between the starting and ending positions of a pump component may be determined and compared with a previously determined or expected value to detect the presence of air or gas in a liquid. In this case, the controller may control the pump to close one or more valves and move a diaphragm in the pump to a variable home position. The pressure of the liquid in the isolated portion while the diaphragm is at the variable home position may be recorded as the starting pressure. The controller may then control the pump to bring the isolated portion to the predetermined ending pressure or diaphragm displacement. This process may cause the diaphragm to move to a different (ending) position. The actual pressure difference between the starting and ending positions of the diaphragm can be compared with an expected pressure difference according to a previously established characterization curve to determine an amount of air in the isolated portion. An alarm may be generated if the amount of air meets or exceeds a predetermined threshold. In addition to or instead of using the position data from a diaphragm, position data associated with other pump components such as a motor or a piston driving the pump may be used. A position sensor may be used to provide such position data to the controller.

Embodiments can provide many advantages over traditional detection systems. For example, embodiments can detect the presence of air in a semiconductor manufacturing fluid before a "bad" dispense of the fluid occurs, reducing waste and cost associated with such a fluid. Furthermore, embodiments can detect air in a pumping system, even if the amount is very small. Embodiments described herein may provide another advantage in that even air that is a relatively large distance from the pump can be detected, including air that might be in tubing, lines or some other component downstream from a dispense chamber. Embodiments described herein provide yet another advantage by allowing the amount of air in a system to be determined for pumps in different setups and/or fluid properties.

These, and other, aspects of the disclosure will be better appreciated and understood when considered in conjunction with the following description and the accompanying drawings. It should be understood, however, that the following description, while indicating various embodiments of the disclosure and numerous specific details thereof, is given by way of illustration and not of limitation.

BRIEF DESCRIPTION OF THE DRAWINGS

The drawings accompanying and forming part of this specification are included to depict certain aspects of the disclosure. It should be noted that the features illustrated in the drawings are not necessarily drawn to scale. A more complete understanding of the disclosure and the advantages thereof may be acquired by referring to the following description, taken in conjunction with the accompanying drawings in which like reference numbers indicate like features and wherein:

FIGURE 1 depicts a diagrammatic representation of a pumping system for dispensing a semiconductor manufacturing fluid on a wafer;

FIGURE 2 depicts a flow diagram illustrating one embodiment of an example test procedure for determining the presence and/or amount of air in a controlled test system;

FIGURE 3 depicts a diagrammatic representation of one embodiment of a multi-stage pump;

FIGURE 4 depicts a diagrammatic representation of a test setup for establishing one or more characterization curves for a pumping system;

FIGURE 5 depicts a plot diagram illustrating an example characterization curve;

FIGURE 6 depicts a plot diagram illustrating that the disclosed air confirmation system and method can be relatively insensitive to viscosity;

FIGURE 7 depicts a diagrammatic representation of a pumping system in fluid communication with a pressurizing device;

FIGURE 8 depicts a diagrammatic representation of one embodiment of a pump controller;

FIGURE 9 depicts a flow chart illustrating one embodiment of a test procedure for determining the presence and/or amount of air in a controlled test system;

FIGURE 10 depicts a plot diagram showing variations in $\Delta P$ for various home positions and illustrating an effect of the size of a system; and

FIGURE 11 depicts a portion of a user interface through which a user may interact with an air confirmation system.

DETAILED DESCRIPTION

The disclosure and various features and advantageous details thereof are explained more fully with reference to the exemplary, and therefore non-limiting, embodiments illustrated in the accompanying drawings and detailed in the following description. Descriptions of known starting materials and processes may be omitted so as not to unnecessarily obscure the disclosure in detail. It should be understood, however, that the detailed description and the specific examples, while indicating the preferred embodiments, are given by way of illustration only and not by way of limitation.

As used herein, the terms "comprises," "comprising," "includes," "including," "has," "having" or any other variation thereof, are intended to cover a non-exclusive inclusion. For example, a process, product, article, or apparatus that comprises a list of elements is not necessarily limited to only those elements but may include other elements not expressly listed or inherent to such process, product, article, or apparatus. Further, unless expressly stated to the contrary, "or" refers to an inclusive or and not to an exclusive or. For example, a condition A or B is satisfied by any one of the following: A is true (or present) and B is false (or not present), A is false (or not present) and B is true (or present), and both A and B are true (or present).

Additionally, any examples or illustrations given herein are not to be regarded in any way as restrictions on, limits to, or express definitions of, any term or terms with which they are utilized. Instead these examples or illustrations are to be regarded as being described with respect to one particular embodiment and as illustrative only. Those of ordinary skill in the art will appreciate that any term or terms with which these examples or illustrations are utilized encompass other embodiments as well as implementations and adaptations thereof which may or may not be given therewith or elsewhere in the specification and all such embodiments are intended to be included within the scope of that term or terms. Language designating such non-limiting examples and illustrations includes, but is not limited to: "for example," "for instance," "e.g.," "in one embodiment," and the like.

Embodiments disclosed herein may be useful for determining the presence or quantity of air in a fluid delivery system.

Within this document, a volume may be referred to in terms of milliliters (mL), cubic centimeters (cc), or some other volumetric unit, and pressure may be expressed in pascal (Pa) and complementarily in millipounds or pounds per square inch (milliPSI/mPSI or PSI, respectively).

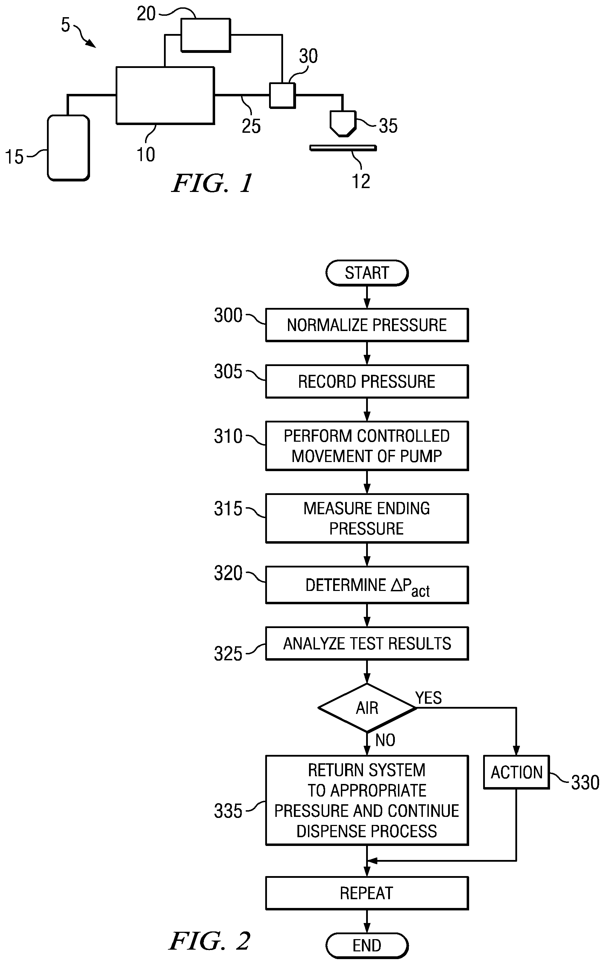

Figure 1 depicts a diagrammatic representation of a pumping system 5 for dispensing fluid on a wafer or other substrate (e.g., hard disk, flat panel, and the like) 12. The pumping system 5 can include a fluid source 15, a pump 10, downstream component or conduit (including, for example, tubing, lines, heat exchangers, flow meters, valves, etc.) 25, an external valve 30 and a nozzle 35. The operation of pump 10 can be controlled by pump controller 20, which can be onboard pump 10 or connected to pump 10 via one or more communications links for communicating control signals, data or other information. External valve 30 can be controlled by pump controller 20 or other controller.

Pump 10 draws fluid from fluid source 15 into pump 10 and outputs a controlled volume of fluid into outlet line 25. The fluid passes through external valve 30 and nozzle 35 to be dispensed on wafer 12. A stop valve or suckback valve can be used as external valve 30 to prevent drips from nozzle 35 at the end of a dispense.

Pump 10 can be a single stage, bag in a bottle, or multi-stage pump adapted to dispense fluid including, for example, liquid photochemicals or other chemicals used in semiconductor manufacture. In some embodiments, pump 10 does not include a filter. In some embodiments, pump 10 can include a dispense chamber in fluid communication with outlet line 25 and is capable of controlled movement (e.g., of a diaphragm and/or piston or other mechanism) to displace a controlled volume of fluid from the chamber to outlet line 25. In a system with no air in the dispense chamber or downstream of the dispense chamber, for example, a dispense or outlet line 25, movement of pump 10 by a particular amount causes a known displacement of volume in the chamber, which corresponds to the amount of fluid dispensed if there is no air present. However, if there is air (or other gas) in the dispense chamber or outlet line 25, the same amount of movement in pump 10 will result in less fluid dispensed. Therefore, to ensure a "good" dispense, it is helpful to know whether and how much air is in the system. Embodiments described herein provide a mechanism to test for air in pump 10, outlet line 25 and other components downstream of pump 10.

The test involves creating a controlled test system within pumping system 5 and pressurizing liquid in the controlled test system. The controlled test system will act differently depending on the presence and amount of air. For example, the pressure in the controlled test system may depend on the presence and amount of air.

In one embodiment, to test for the presence of air, dispense chamber and outlet line 25 are isolated (from a fluid flow perspective) to create the controlled test system. For example, all the fluid flow paths to/from the dispense chamber except for the flow path to outlet line 25 are closed. Additionally, external valve 30 is closed thus creating a closed system from the dispense chamber to external valve 30.

In a closed system, the expected change in pressure in a liquid for a given controlled movement of pump 10 is known ($\Delta P_{exp}$). To test for air, pump 10 can perform a controlled movement and determine the actual change in pressure ($\Delta P_{act}$) for the controlled movement. If air or other gas is present, $\Delta P_{act}$ will be less than $\Delta P_{exp}$.

As discussed below, there is a correlation between the difference between $\Delta P_{act}$ and $\Delta P_{exp}$. Characterization

curves can be developed to characterize the amount of air in a liquid based on the difference between $\Delta P_{act}$ to $\Delta P_{exp}$. Thus, a test for air in a liquid can determine not only the presence of air, but also the approximate amount of air.

According to one embodiment, pump controller 20 (or other controller) can store one or more $\Delta P_{exp}$ and/or one or more characterization curves. The $\Delta P_{exp}$ and characterization curves can correspond to different pumping system setups and/or fluids. For a particular manufacturing environment, the appropriate $\Delta P_{exp}$ and/or characterization curve can be selected for performing the test.

Figure 2 depicts a flow chart illustrating one embodiment of a test procedure for determining the presence and/or amount of air in liquid in a controlled test system using the above-described example of a portion of the dispense pump including the dispense chamber and outlet line being isolated. The fluid in the isolated portion can be brought to a normalized pressure (step 300). That is, the pressure in the isolated portion of the system is brought to a predefined starting pressure. The starting pressure can be recorded (step 305). It is preferable that the normalized pressure is greater than the pressure when the dispense chamber is initially isolated because, in a motor driven pump, increasing the pressure requires the dispense motor to move forward in the initial steps of the test. By moving the motor forward to reach the normalized pressure, any error due to play between components (e.g., play between the motor and a lead screw) when the motor moves forward in subsequent steps is eliminated or reduced. The position of a piston in the pump may be determined.

The pump can perform a controlled pressure increment, or, in the case of a pump with a motor, a controlled movement (step 310) and the ending pressure recorded (step 315). Again, using the example of a motor driven pump, the motor can be moved a controlled distance to a second position, with the distance corresponding to a known change in the volume in the chamber and having a corresponding ending pressure. The actual $\Delta P$ ($\Delta P_{act}$) between the starting pressure and ending pressure can be determined (step 320). The test results can be analyzed to determine if there is air or other gas in the dispense chamber and downstream tubing (step 325).

In general, if air is present in the dispense chamber or downstream tubing (or other component in the controlled test system), the $\Delta P_{act}$ will be less than the expected $\Delta P$ ($\Delta P_{exp}$) when there is no air in the dispense chamber or outlet line. Thus, $\Delta P_{act}$ can be compared to an expected $\Delta P_{exp}$ and if $\Delta P_{act}$ is less than $\Delta P_{exp}$ it can be determined that air is present. In some embodiments, to account for the resolution of sensors or other factors, the difference between $\Delta P_{exp}$ and $\Delta P_{act}$ can be compared to a threshold and if the difference is greater than the threshold, it is determined that there is air in the system. An appropriate action can be taken (e.g., an alarm generated, pump taken off-line, the user prompted to perform an outlet line purge or other action) (step 330) based on this determination. In another embodiment, the difference between $\Delta P_{act}$ and $\Delta P_{exp}$ can be used to determine the amount of air in the dispense chamber and downstream tubing. For example, the difference between $\Delta Pact$ and $\Delta P_{exp}$ can be compared to a selected curve that characterizes the difference between $\Delta Pact$ and $\Delta P_{exp}$ versus the amount of air (a "characterization curve") to determine the amount of air. Based on the amount of air, the appropriate action can be taken (e.g., an alarm generated, pump taken off-line, amount of air reported, user prompted to perform a purge of the outlet line or other action).

In one embodiment, after the air test is complete and the amount of air in the system has been determined, the fluid in the system can be returned to the appropriate pressure for the next segment of the cycle and the process continued (step 335). In one embodiment, the pump may drive the liquid to an idle pressure before the next step in the cycle. As an example, the pump may drive the liquid to an idle pressure of 13789.5 Pa (2 psi). Other settings for an idle pressure may also be possible.

The steps of Figure 2 can be repeated as needed as desired. By way of example, the steps of Figure 2 can be repeated every dispense cycle. Other implementations may be possible, depending on configuration needs.

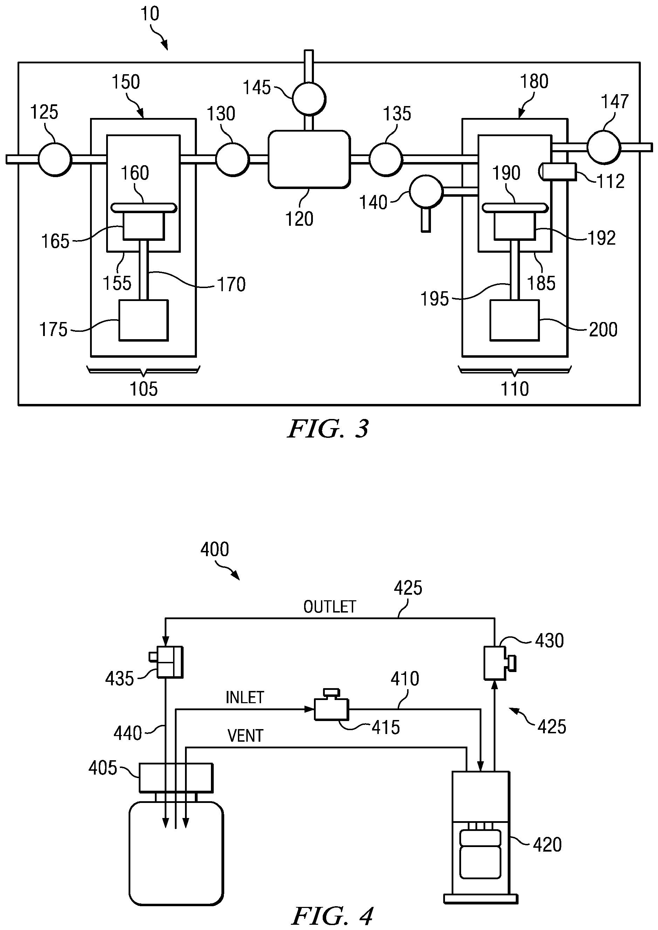

In one arrangement, pump 10 can be a multi-stage pump such as the Intelligen® Mini and Intelligen® HV Dispense Systems by Entegris, Inc. of Billerica MA. Figure 3 depicts a diagrammatic representation of one embodiment of a multi-stage pump. Multi-stage pump 10 includes a feed stage portion 105 and a separate dispense stage portion 110. Within this disclosure, the terms "feed" and "fill" may be used interchangeably. Located between feed stage portion 105 and dispense stage portion 110, from a fluid flow perspective, is filter 120 to filter impurities from the process fluid. A number of valves can control fluid flow through multi-stage pump 10 including, for example, inlet valve 125, isolation valve 130, barrier valve 135, purge valve 140, vent valve 145 and outlet valve 147. Dispense stage portion 110 can further include a pressure sensor 112 that determines the pressure of fluid at dispense stage 110. The pressure determined by pressure sensor 112 can be used to control the speed of the various pumps as described below. Example pressure sensors include ceramic and polymer pesioresistive and capacitive pressure sensors, including those manufactured by Metallux AG, of Korb, Germany. According to one embodiment, the face of pressure sensor 112 that contacts the process fluid is a perfluoropolymer. Pump 10 can include additional pressure sensors, such as a pressure sensor to read pressure in feed chamber 155.

Feed stage 105 and dispense stage 110 can include rolling diaphragm pumps to pump fluid in multi-stage pump 10. Feed-stage pump 150 ("feed pump 150"), for example, includes a feed chamber 155 to collect fluid, a feed stage diaphragm 160 to move within feed chamber 155, a piston 165 to move feed stage diaphragm 160, a lead screw 170 and a stepper motor 175. Lead screw 170 couples to stepper motor 175 through a nut, gear or other mechanism for imparting energy from the motor to lead screw 170. According to one embodiment, feed motor 175 rotates a nut that, in turn, rotates lead screw 170, causing piston 165 to actuate. Dispense-stage pump 180 ("dispense pump 180") can similarly include a dispense chamber 185, a dispense stage diaphragm 190, a piston 192, a lead screw 195, and a dispense motor 200. Dispense motor 200 can drive lead screw 195 through a threaded nut (e.g., a Torlon or other material nut).

Feed motor 175 and dispense motor 200 can be any suitable motor. According to one embodiment, dispense motor 200 is a Permanent-Magnet Synchronous Motor ("PMSM"). The PMSM can be controlled by a digital signal processor ("DSP") utilizing Field-Oriented Control ("FOC") or other type of position/speed control known in the art at motor 200, a controller onboard multi-stage pump 10 or a separate pump controller. PMSM 200 can further include an encoder (e.g., a fine line rotary position encoder) for real time feedback of dispense motor 200's position. The use of a position sensor gives accurate and repeatable control of the position of piston 192, which leads to accurate and repeatable control over fluid movements in dispense chamber 185. For, example, using a 2000 line encoder, which according to one embodiment gives 8000 pulses to the DSP, it is possible to accurately measure to and control at .045 degrees of rotation. In addition, a PMSM can run at low velocities with little or no vibration. Feed motor 175 can also be a PMSM or a stepper motor. It should also be noted that the feed pump can include a home sensor to indicate when the feed pump is in its home position.

During operation of multi-stage pump 10, the valves of multi-stage pump 10 are opened or closed to allow or restrict fluid flow to various portions of multi-stage pump 10. According to one embodiment, these valves can be pneumatically actuated (i.e., gas driven) diaphragm valves that open or close depending on whether pressure or a vacuum is asserted. However, in other embodiments, any suitable valve can be used.

The following provides a summary of various stages of operation of one embodiment of a multi-stage pump 10. However, multi-stage pump 10 can be controlled according to a variety of control schemes. In one embodiment, multi-stage pump 10 can include a ready segment, dispense segment, fill segment, pre-filtration segment, filtration segment, vent segment, purge segment and static purge segment. During the fill segment, inlet valve 125 is opened and feed stage pump 150 moves (e.g., pulls) feed stage diaphragm 160 to draw fluid into feed chamber 155. Once a sufficient amount of fluid has filled feed chamber 155, inlet valve 125 is closed. During the filtration segment, feed-stage pump 150 moves feed stage diaphragm 160 to displace fluid from feed chamber 155. Isolation valve 130 and barrier valve 135 are opened to allow fluid to flow through filter 120 to dispense chamber 185. Isolation valve 130, according to one embodiment, can be opened first (e.g., in the "pre-filtration segment") to allow pressure to build in filter 120 and then barrier valve 135 opened to allow fluid flow into dispense chamber 185. According to other embodiments, both isolation valve 130 and barrier valve 135 can be opened and the feed pump moved to build pressure on the dispense side of the filter. During the filtration segment, dispense pump 180 can be brought to its home position. The home position is selected based on various parameters for the dispense cycle to reduce unused hold up volume of multi-stage pump 10. Feed pump 150 can similarly be brought to a home position that provides a volume that is less than its maximum available volume.

At the beginning of the vent segment, isolation valve 130 is opened, barrier valve 135 closed and vent valve 145 opened. In another embodiment, barrier valve 135 can remain open during the vent segment and close at the end of the vent segment. During this time, if barrier valve 135 is open, the pressure can be understood by the controller because the pressure in the dispense chamber, which can be measured by pressure sensor 112, will be affected by the pressure in filter 120. Feed-stage pump 150 applies pressure to the fluid to remove air bubbles from filter 120 through open vent valve 145. Feed-stage pump 150 can be controlled to cause venting to occur at a predefined rate, allowing for longer vent times and lower vent rates, thereby allowing for accurate control of the amount of vent waste. If feed pump is a pneumatic style pump, a fluid flow restriction can be placed in the vent fluid path, and the pneumatic pressure applied to feed pump can be increased or decreased in order to maintain a "venting" set point pressure, giving some control of an otherwise uncontrolled method.

At the beginning of the purge segment, isolation valve 130 is closed, barrier valve 135, if it is open in the vent segment, is closed, vent valve 145 closed, and purge valve 140 opened and inlet valve 125 opened. Dispense pump 180 applies pressure to the fluid in dispense chamber 185 to vent air bubbles through purge valve 140. During the static purge segment, dispense pump 180 is stopped, but purge valve 140 remains open to continue to vent air. Any excess fluid removed during the purge or static purge segments can be routed out of multi-stage pump 10 (e.g., returned to the fluid source or discarded) or recycled to feed-stage pump 150. During the ready segment, inlet valve 125, isolation valve 130 and barrier valve 135 can be opened and purge valve 140 closed so that feed-stage pump 150 can reach ambient pressure of the source (e.g., the source bottle). According to other embodiments, all the valves can be closed at the ready segment.

During the dispense segment, outlet valve 147 opens and dispense pump 180 applies pressure to the fluid in dispense chamber 185. Because outlet valve 147 may react to controls more slowly than dispense pump 180, outlet valve 147 can be opened first and some predetermined period of time later dispense motor 200 started. This prevents dispense pump 180 from pushing fluid through a partially opened outlet valve 147. Moreover, this prevents fluid moving up the dispense nozzle caused by the valve opening, followed by forward fluid motion caused by motor action. In other embodiments, outlet valve 147 can be opened and dispense begun by dispense pump 180 simultaneously.

An additional suckback segment can be performed in which excess fluid in the dispense nozzle is removed. During the suckback segment, outlet valve 147 can close and a secondary motor or vacuum can be used to suck excess fluid out of the outlet nozzle (e.g., at external valve 30 of Figure 1). Alternatively, outlet valve 147 can remain open and dispense motor 200 can be reversed to suck fluid back into the dispense chamber. The suckback segment helps prevent dripping of excess fluid onto the wafer.

The foregoing segments are provided by way of example. Regardless of the segments used in a dispense cycle, pump 10 can be used to test for air in fluid that is to be dispensed. Optionally, outlet line 25 can be primed and vented (i.e., filled with a liquid with little or no visible air) so that the pump function to control a dispense operation properly. In some embodiments, outlet line 25 can be filled with a fluid that contains about 2 cc or less of air. This may be particularly useful prior to a dispense segment. During the test, as discussed above, the dispense chamber can be isolated from the remainder of the pump (e.g., with purge valve 140 and barrier valve 135 closed) while in fluid communication with outlet line 25.

A test according to Figure 2 using the Intelligen® Mini Dispense System may be performed as follows: the Intelligen® Mini Dispense System can normalize pressure (step 300) at approximately 27579.0-41368.5 Pa (4-6 PSI), perform a controlled movement (step 310) corresponding to a 0.2 cc displacement, determine the pressure after the movement (step 320), compare $\Delta P_{act}$ and $\Delta P_{exp}$ (step 325) and generate an alarm if the difference between $\Delta P_{act}$ and $\Delta P_{exp}$ is more than a threshold amount (e.g., 689.5 Pa (100 miliPSI) ) (step 330) and return the fluid in the dispense chamber to a pressure of 6894.8-20684.3 Pa (1-3 PSI) if no air is detected (step 335).

Figure 4 depicts a diagrammatic representation of a test setup 400 for developing characterization curves for a pumping system. Setup 400 includes a fluid reservoir 405, upstream tubing 410 (1/4" OD), a reservoir to inlet injection port 415, a pump 420, outlet line tubing 425 (1/4" OD), 0.3 meters in length to injection port 430), an outlet air injection port 430, tubing (4 meters) between outlet air injection port 430 and external stop suckback valve 435 and external valve to nozzle tubing 440 (1/4 OD, 3mm ID). The pump can be primed and several dispense cycles performed to ensure the filter is fully wetted. Air can be injected into injection port 430 and a test performed to determine the presence of air in the dispense chamber of pump 420 and/or outlet line tubing 425. Injection port 430 may have a septum that can be penetrated to allow a known amount of air to be injected into a system.

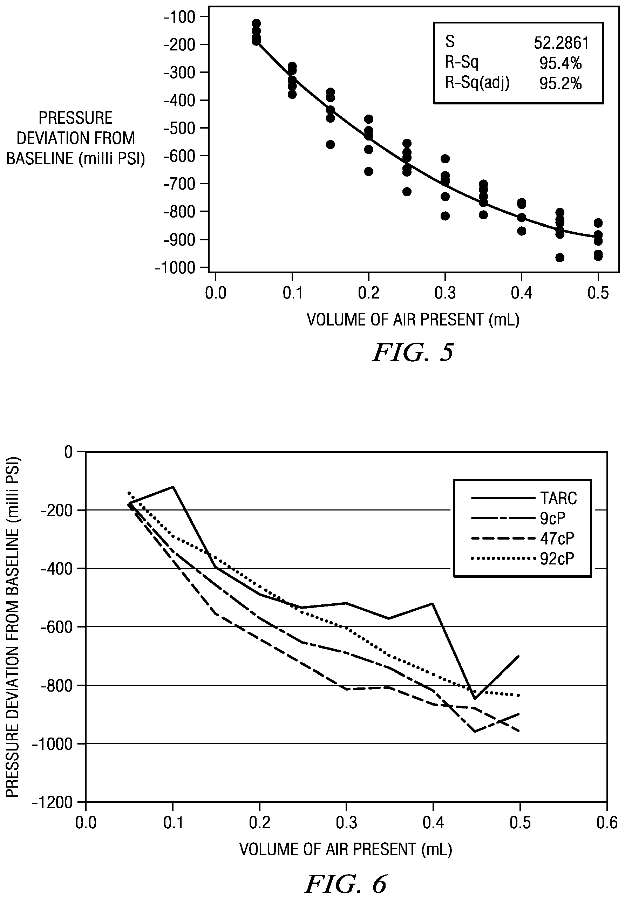

A system such as depicted in Figure 4 was used to develop a characterization curve for a system using an Intelligen® Mini Dispense System. The pressure was normalized to 31026.4 Pa (4.5 PSI, the motor moved an amount equivalent to a 0.2 cc dispense, and the ending pressure read. The $\Delta P_{exp}$ (e.g., determined from tests with no air) was 10342.1 Pa (1.5 PSI. In subsequent tests, known amounts of air were injected through injection port 430. Repeatable results were found that correlated the difference between $\Delta P_{act}$ and $\Delta P_{exp}$. Pressure deviations from an expected pressure may be expressed mathematically and plotted as a fitted line. Figure 5 depicts a plot diagram illustrating a characterization curve for a single viscosity over multiple runs. The X axis is the amount of air injected and the Y axis is the difference between $\Delta P_{act}$ and $\Delta P_{exp}$ (i.e., the pressure deviation) in Pa . Figure 6 illustrates that a similar test was repeated to develop correlation curves using fluids of different viscosities, including Top Antireflective Coating (TARC) 9 cP, 47 cP and 92 cP. Figure 6 therefore demonstrates that the air detection technique disclosed herein can be relatively insensitive to viscosity. Similar correlation curves can be developed for different setups (e.g., using more or different tubing or other setups) and/or different fluid properties. Figure 6 is a non-limiting example that also illustrates that small amounts of gas can be detected in a liquid. An example of a small amount of gas may be about 0.5 mL, 0.2 mL, 0.1 mL, anywhere between about 0.5 mL and 0.1 mL, or less than 0.1 mL. Whether an amount of gas can be considered small may depend on various factors such as system configuration and dispense application. By way of example, 0.5 mL of air in a liquid may have no adverse effect in dispensing the liquid onto a substrate and may thus be considered to be a small amount. Likewise, whether an amount of gas can be considered large may depend on what amount is considered small. For example, a large amount of gas may range from about 1 mL to 2.0 mL. A user may set a tolerance which defines an amount of air in a liquid that a system can tolerate. As an example, if a system has a tolerance setting of 0.5 mL of air in a given liquid, the system may operate to alert a user and/or take appropriate action when 0.6 mL of air is detected in a given liquid. An example action may be to stop dispensing the liquid. If more than 2.0 mL of air is detected in the liquid, it may be an indication of a more serious condition that cannot be readily resolved. The system may need to be taken offline for further investigation.

$\Delta P_{exp}$ and the curve that characterizes the difference between $\Delta P_{act}$ and $\Delta P_{exp}$ and the amount of air is dependent on the pump being used, size and length of downstream tubing and other characteristics of the pumping system. According to one embodiment, a number of systems can be tested to develop different $\Delta P_{exp}$ and characterization curves with each $\Delta P_{exp}$ value/characterization curve corresponding to a different setup and/or fluid. For example, $\Delta P_{exp}$ and characterization curves can be developed for the Intelligen® Mini Dispense System with various lengths of outlet line (e.g., 4.3 meters, 6 meters and 10 meters of ¼" OD downstream tubing). When a pump is installed in a manufacturing system, the $\Delta P_{exp}$ and/or characterization curve that best fits the manufacturing system setup can be selected for use. $\Delta P_{exp}$

and characterization curves may be generalized for a particular model of pump or may be developed for each individual pump.

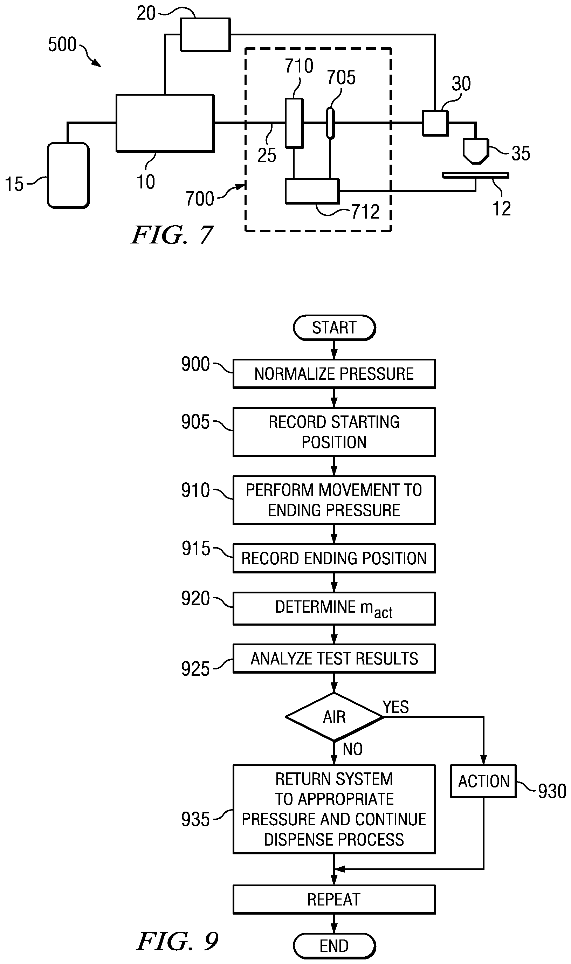

In the setup of Figure 4, the pressure measurements can be taken using the pressure sensor in the dispense chamber of the pump. In other embodiments, the pressure can be read by an external pressure sensor positioned to read pressure between a pump and external valve 30. Furthermore, in Figure 4, the pump itself is used to pressurize the fluid during the test. In other embodiments, the fluid can be pressurized using any device that can perform a sufficiently accurate displacement. Figure 7 for example, illustrates a system similar to that of Figure 1, but with a testing system 700 having pressure sensor 705 located between the pump 10 and external valve 30, a pressurizing device 710 and a controller 712. Pressurizing device 710 can include any device capable of pressurizing fluid. By way of example, but not limitation, pressurizing device 710 can include a fluid chamber in fluid communication with outlet line 25 (and the dispense chamber of pump 10), a diaphragm, and a drive component (e.g., a motor or pneumatic drive mechanism) to drive the diaphragm. If a pneumatic drive mechanism is used, a mechanical stop can be employed to ensure the appropriate displacement in fluid chamber. According to one embodiment, pressurizing device 710 can be a small pump or other such device. A controller 712 can receive pressure signals from pressure sensor 705 and send control signals to the pressurizing device 710.

According to one embodiment, testing system 700 can perform the test for air much as described in conjunction with Figure 2 except that the fluid is pressurized by known movement of pressurizing device 710 rather than pump 10. Preferably, when the test is performed, pressurizing device 710 is in fluid communication with external valve 30 and the dispense chamber of pump 10. While shown in conjunction with a pump, test system 700 can be used to test for air in other portions of manufacturing system that can be closed and pressurized.

In yet another embodiment, pressurization can be done by external valve 30 (e.g., if external valve 30 is a suckback valve and can perform controlled pressurization) or other component capable of controlled movement.

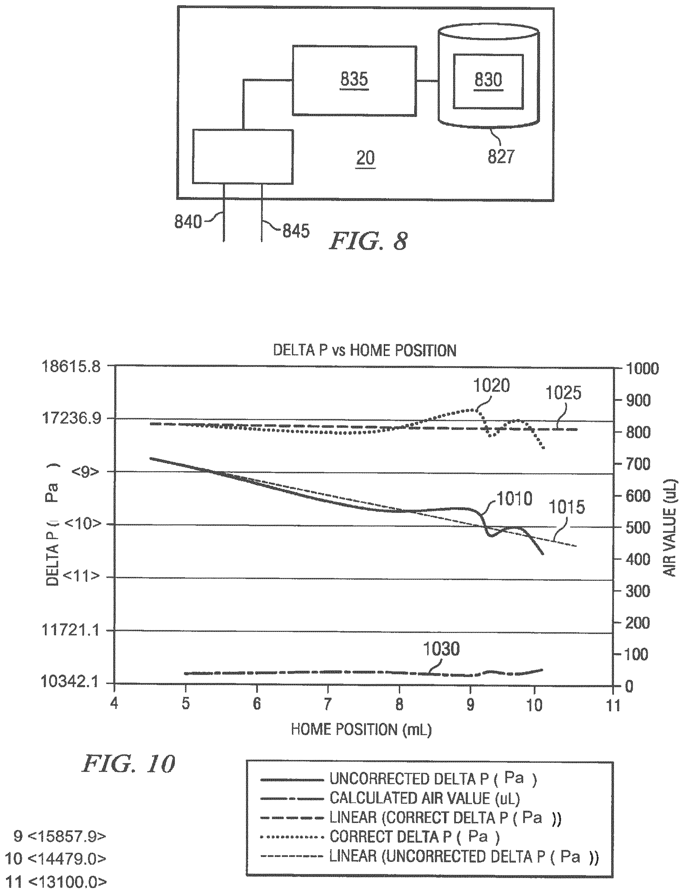

Figure 8 depicts a diagrammatic representation of one embodiment of a pump controller. Pump controller 20 can include a computer readable medium 827 (e.g., RAM, ROM, Flash memory, optical disk, magnetic drive or other computer readable medium) containing a set of control instructions 830 for controlling the operation of pump 10. A processor 835 (e.g., CPU, ASIC, RISC, DSP or other processor) can execute the instructions. One example of a processor is the Texas Instruments TMS320F2812PGFA 16-bit DSP (Texas Instruments is Dallas, TX based company). In the context of Figure 1, controller 20 can communicate with pump 10 via communications links 840 and 845. Communications links 840 and 845 can be networks (e.g., Ethernet, wireless network, global area network, DeviceNet network or other network known or developed in the art), a bus (e.g., SCSI bus) or other communications link. Controller 20 can be implemented as an onboard PCB board, remote controller or in other suitable manner. Pump controller 20 can include appropriate interfaces (e.g., network interfaces, I/O interfaces, analog to digital converters and other components) to controller to communicate with pump 10. Additionally, pump controller 20 can include a variety of computer components known in the art including processors, memories, interfaces, display devices, peripherals or other computer components not shown for the sake of simplicity. Pump controller 20 can control various valves and motors in pump 10 to cause pump 10 to accurately dispense fluids, including low viscosity fluids (i.e., less than 100 centipoise) or other fluids. Controller 712 shown in Figure 7 can have similar components.

Figure 9 depicts a flow chart illustrating one embodiment of a test procedure for determining the presence and/or amount of air in a controlled test system using the example of a dispense pump and outlet line. The dispense pump, which has a dispense chamber in this case, and the outlet line, which is downstream from the dispense chamber, are filled with a test fluid. The dispense chamber and the outlet line are isolated and the pressure there in is normalized (step 900). That is, the pressure in the isolated portion is brought to a predefined starting pressure. The starting position of a pump component (e.g., a diaphragm, a motor, a piston, etc.) can be recorded at this time (step 905).

The pump can perform a controlled movement (step 910) until a desired ending pressure is reached and the position of the chosen pump component recorded (step 915). The actual movement of the pump "$m_{act}$" between the starting position and the ending position can be determined (step 920). The test results can be analyzed to determine if there is air in the dispense chamber and the downstream tubing (the outlet line) (step 925).

In general, if air is present in the isolated portion (the dispense chamber and its downstream tubing in the above example of a controlled test system), the $m_{act}$ will be greater than the expected movement $m_{exp}$ when there no air in the dispense chamber or outlet line. Thus, $m_{act}$ can be compared to $m_{exp}$ and if $m_{act}$ is greater than $m_{exp}$ it can be determined that air is present. To account for the resolution of sensors or other factors, the difference between $m_{exp}$ and $m_{act}$ can be compared to a threshold and if the difference is greater than the threshold, it can indicate that there is air in the system or some other error. An appropriate action can be taken (e.g., an alarm generated, pump taken offline, the user prompted to perform an outlet line purge or other action) (step 930) based on this determination. In another embodiment, the difference between $m_{act}$ and $m_{exp}$ can be used to determine the amount of air in the dispense chamber and downstream tubing. For example, the difference between $m_{act}$ and $m_{exp}$ can be compared to a selected curve that characterizes the difference between $m_{act}$ and $m_{exp}$ versus the amount of air (a "characterization curve") to determine the amount of air. Based on the amount of air, the appropriate action can be taken (e.g., an alarm generated, pump taken off-line, amount of air reported, user prompted to perform a purge of the outlet line or other action).

If air is not detected, the fluid in the system can be returned to the appropriate starting pressure for the next segment of a dispense cycle and the dispense process continued (step 935). The steps of Figure 9 can be repeated as needed or as desired. By way of example, the steps of Figure 9 can be repeated every dispense cycle.

A pump controller (or any suitable control logic) can be programmed with a number of different $\Delta P_{exp}$ or $M_{exp}$ values and/characterization curves, each different $\Delta P_{exp}$ /$M_{exp}$ value and characterization curve corresponding to a different setup. Furthermore, while $\Delta P_{exp}$ / $M_{exp}$ and characterization curves are relatively insensitive to fluid properties, each $\Delta P_{exp}$ or $M_{exp}$ characterization curve can correspond to particular fluid properties as well (e.g., viscosity). The user can select the $\Delta P_{exp}$ or $M_{exp}$ characterization curve that best characterizes the pumping system (and/or fluid properties) used on the manufacturing floor.

Utilizing methodologies described above, embodiments can detect air in a pumping system, even if the amount is very small, thereby preventing bad dispenses caused by bubbles/gas in a pump and/or the dispense line between a pump and a nozzle. One embodiment of a system comprises a pump having a dispense chamber (e.g., a multi-stage or single stage dispense pump), an outlet line or another component (e.g., a heat exchanger, valve, flow meter, etc.) that fluidly connects the outlet of the dispense chamber with a nozzle, a valve between the dispense chamber and nozzle (e.g., a stop suckback valve with positive shut off or controllable on-off valve) and a pressure sensor to read the pressure in the dispense chamber or between the dispense chamber and external valve. The system can further include a controller that can close the external valve, measure pressure in the dispense chamber or outlet line and cause the pump device to advance and retract (e.g., to increase or decrease pressure of liquid in the lines).

The controller can control the pump to pressurize fluid to a starting pressure and then perform a controlled movement to change the system pressure. The controller can read the ending pressure and determine the actual change in pressure. The actual change in pressure can be compared to the expected change in pressure for the controlled movement to determine if air is present in the dispense chamber and/or outlet and/or to determine the amount of air present.

There may be alternative methods for performing a test using embodiments disclosed herein. As stated above, in some embodiments, a method may involve fixed movement of a pump in a closed set up. The test may include closing valves to prevent fluid from exiting the system and then moving a motor or piston in pump 10 a fixed predetermined distance and determining an associated change in pressure based on the slope of the pressure measurement. The method may involve measuring the movement of a lead screw until a predetermined pressure is reached and comparing the movement to an expected movement (e.g., $M_{exp}$). In some embodiments, feedback from a position sensor can be used to accurately determine the movement. Any suitable position sensor may be used. Pneumatic and linear encoders are examples of encoders that may provide precise and accurate position sensing. The method may also include operating the motor to a predetermined ("normalized") pressure to remove backlash due to threads before the first pressure is achieved.

The time it takes for the motor to move the fixed distance is known or can be determined. For example, any suitable position sensor may be used to determine the starting position and the ending position. A slope can be calculated and the slope can be compared with an expected slope. A slope for a fluid with no air is expected to be sharp, whereas a slope for a fluid with some air is expected to be more gradual. A curve fit may be calculated. A curve fit may be extrapolated, may be a best fit curve, may be represented as a logarithmic function, etc. A baseline may be established for a particular setup, which may be useful to account for different tubing, compliance in the system, yielding, or some other variation or characteristic of a system. For example, a system with greater compliance may exhibit smaller pressure differences. Those skilled in the art will appreciate that as the amount of air in the system increases, the change in pressure for a fixed movement air confirmation test will decrease. Above a threshold volume of air, $\Delta P$ will approach 0. Accordingly, the slope will also approach 0.

In some embodiments, the method may involve determining a fixed pressure difference. That is, valves may be closed to create trapped space with an associated fixed volume and the pump may be operated in the trapped space from a first pressure to a second pressure and the distance required to achieve the pressure difference may be determined. For example, barrier valve 135, purge valve 140 and dispense valve 147 shown in Figure 3 or external valve 30 of Figure 7 may be closed to create trapped space. The distance required to achieve the desired pressure change may be compared to a chart or otherwise compared to an expected distance to determine the existence or amount of air in a system.

In some embodiments, a valve in the fixed volume of the trapped space may be closed, displacing a volume. The pressure may be measured before and after the valve closed to determine the presence or quantity of air in the system.

Tolerances may be set to allow the system to operate within a desired range but alert a user if the presence or quantity of air in the system or the compliance exceeds a predetermined amount. A user may be presented with an interface to allow the user to set the tolerances, specify a threshold, etc.

Embodiments disclosed herein may detect minute amounts of air in a fluid delivery system. Embodiments disclosed herein may also detect air for as long as the air is in a system, including air in tubing. Other factors that may affect air detection methods include the maximum dispense volume, the purge volume, the pump set-up (including pump length), and individual pump characteristics.

As mentioned above, the effects of air in a system may depend on the pump set-up, such that smaller systems might exhibit greater effects than larger systems. Accordingly, variable home positions may cause errors in the amount of air indicated in the system. Even though the difference between a starting volume and an ending volume may be the same, having different starting volumes may affect the calculations used to determine how much air is in the system. Embodiments disclosed herein may also correct or adjust values to account for variations in home position for a pump. In some embodiments, the difference in pressure can be normalized to account for differences in volume and then converted to a value expressed in terms of volume of air. The normalized and converted value may be displayed to the user.

Normalizing and converting values may be performed in steps. For example, Equations 1-6, expressed below, provide for normalizing and converting $\Delta P$ values to air values.

In some embodiments, a formula for calculating the change in pressure may be expressed as

$$AirTestControl.DeltaPressure\_mPSI= (float)AirTestControl.EndingPres\_mPSI-$$
$$(float)AirTestControl.StartingPres-mPSI \quad (Eq. 1);$$

and the home position composition may be expressed as:

$$AirTestCorrectedDelta\_mPSI=AirTestControl.DeltaPressure\_mPSI * ((0.027117 *$$
$$SystemParms.HoldUpVolume) + 0.930) \quad (Eq. 2).$$

The log function cannot handle 0, so

$$if (AirTestControl.CorrectedDeltaP\_mPSI < 23.0),$$
$$AirTestControl.CorrectedDeltaP\_mPSI = 23.0 \quad (Eq. 3).$$

To convert from DeltaP to mL (or air value):

$$AirTestControl.AirAmount\_mL = -.3063 * log(AirTestControl.CorrectdDeltaP\_mPSI) +$$
$$2.4228 \quad (Eq.4)$$

To convert from mL to uL:

$$AirTestControl.AirAmount\_uL=(int)(AirTestControl.AirAmount\_mL * 1000.0) + .5)$$
$$(Eq. 5).$$

A system can't have less than 0 uL of air, so

$$If(AirTestControl.AirAmount\_uL < 0) AirTestControl.AirAmount\_uL = 0 \quad (Eq. 6).$$

Thus, embodiments disclosed herein can convert $\Delta P$ values to air volume values. Figure 10 depicts a graph with line 1010 representing variations in $\Delta P$ for various home positions, and line 1015 indicating a trend, illustrating an effect of the size of a system. However, line 1015 may depend on the size of the pump, the length of tubing, etc. For example, for a pump with a pump position of 5 mL, the change in pressure may be over 15857.9 Pa (2300 mPSI), while for a pump with a position of 10 mL, the change in pressure may be less than 13789.5 Pa (2000 mPSI). Using this example, a small pump may indicate much earlier or more frequently that there is a problem with the pump. Line 1020 depicts normalized variations in $\Delta P$ for various home positions, and line 1025 indicates a substantially constant trend. Line 1030 depicts a corrected trend, which may provide a user with information on how much air is in the system, whether the amount of air is actually increasing or decreasing, etc.

Further statistical analysis may be performed to determine if the system is trending in a direction. For example, a statistical analysis may be performed regarding the presence of more air each cycle and may conclude that a seal is deteriorating.

Embodiments may be performed at the end of a dispense cycle. Valves may be closed to create trapped space, pressure may be optionally increased to reduce or eliminate backlash, a test may be performed to determine the presence or quantity of air in the system, and the system may be set up to perform the next dispense cycle. In some embodiments, a pressure of 20684.3 Pa (3 PSI) is sufficient to mitigate backlash.

The system may be set up to send an alarm, log an event, or even stop if an amount of air is detected in the system. Furthermore, embodiments can operate to expand the volume in a system and detect a drop in pressure. Operating the system to detect a drop in pressure may be advantageous for avoiding pressure spikes and setups before the next dispense cycle.

Embodiments may also be implemented as a stand-alone device. A diaphragm or some other fluid/liquid displacement element may be positioned in a portion of a closed dispense system and the diaphragm or fluid displacing element may be actuated to get a pressure increase. The device may be attached to a system with little or no modification to existing parts of the system. A volume reduction component may be attached to a dispense line and measurements may be taken when the valves are closed.

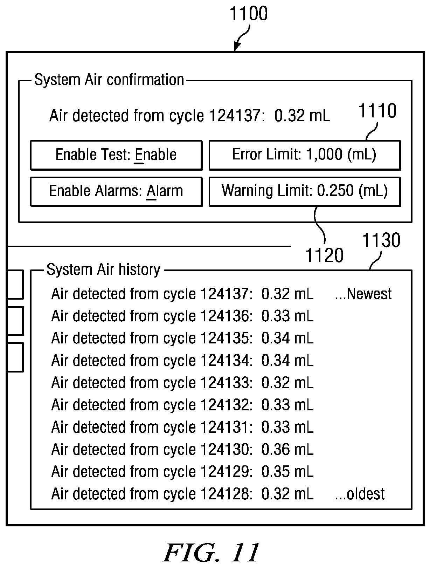

A user may navigate through various screens in a user interface to set up and use an air confirmation system. Figure 11 depicts a portion of a user interface which may be presented to a user via a computing device. As Figure 11 exemplifies, interface 1100 may allow a user to set error limit 1110 or warning limit 1120. Interface 1100 may also display data 1130 to allow a user to see how the system is performing regardless of any limits.

Embodiments herein provide advantages over previous systems due to detection of air before a "bad" dispense occurs. Embodiments described herein may provide another advantage in that air that is a relatively large distance from the pump can be detected. Embodiments described herein provide yet another advantage by allowing the amount of air in a system to be determined for pumps in different setups.

Embodiments disclosed herein may be useful for detecting air in fluid delivery systems, including embodiments of fluid delivery systems having variable home positions or that can use different recipes or fluids. According to some embodiments of the present invention, a home position of the feed and dispense pumps can be defined such that the fluid capacity of the dispense pump is sufficient to handle a given "recipe" (i.e., a set of factors affecting the dispense operation including, for example, a dispense rate, dispense time, purge volume, vent volume or other factors that affect the dispense operation), a given maximum recipe or a given set of recipes. The home position of a pump is the position of pump that has the greatest available volume for a given cycle. For example, the home position can be the diaphragm position that gives a greatest allowable volume during a dispense cycle. The available volume corresponding to the home position of the pump will typically be less than the maximum available volume for the pump.

For example, given a recipe in which the dispense segment uses 4 mL of fluid, the purge segment 1 mL, the vent segment 0.5 mL and the suckback segment recovers 1 mL of fluid, the maximum volume required by the dispense pump is:

$$V_{DMax}=V_D+V_P+e_1$$

$V_{DMax}$ = maximum volume required by dispense pump
$V_D$ = volume dispensed during dispense segment
$V_P$ = volume purged during purge segment
$e_1$ = an error volume applied to dispense pump

and the maximum volume required by feed pump 150 is:

$$V_{FMax}=V_D+V_P+V_v-V_{suckback}+e_2$$

$V_{FMax}$ = maximum volume required by dispense pump
$V_D$ = volume dispensed during dispense segment
$V_P$ = volume purged during purge segment
$V_v$ = volume vented during vent segment
$V_{suckback}$ = volume recovered during suckback
$e_2$ = error volume applied to feed pump

Assuming no error volumes are applied, $V_{DMax}$ = 4 + 1 = 5 mL and $V_F$ max = 4 + 1 + 0.5 - 1 = 4.5 mL. In cases in which dispense pump 180 does not recover fluid during suckback, the $V_{suckback}$ term can be set to zero or dropped. The terms $e_1$ and $e_2$ can be zero, a predefined volume (e.g., 1mL), calculated volumes or other error factor. The terms

$e_1$ and $e_2$ can have the same value or different values (assumed to be zero in the previous example).

Using the example of $V_{Dmax}$ = 5 mL and $V_{Fmax}$ = 4.5 mL, during the ready segment, dispense pump 180 will have a volume of 4 mL and feed pump 150 will have a volume of 0 mL. Dispense pump 180, during the dispense segment, dispenses 4 mL of fluid and recovers 1 mL during the suckback segment. During the fill segment, feed pump 150 recharges to 4.5 mL. During the filtration segment, feed pump 150 can displace 4 mL of fluid causing dispense pump 180 to fill to 5 mL of fluid. Additionally, during the vent segment, feed pump 150 can vent 0.5 mL of fluid. Dispense pump 180, during the purge segment can purge 1 mL of fluid to return to the ready segment. In this example, there is no hold-up volume as all the fluid in the fill segment and dispense segment is moved.

For a pump that is used with several different dispense recipes, the home position, of the dispense pump and feed pump can be selected as the home position that can handle the largest recipe. Table 1, below, provides example recipes for a multi-stage pump.

**Table 1**

|  | RECIPE 1 | RECIPE 2 |
|---|---|---|
| Name: | Main Dispense 1 | Main Dispense 2 |
| Dispense Rate | 1.5 mL/sec | 1 mL/sec |
| Dispense Time | 2 sec | 2.5 sec |
| Resulting Volume | 3 mL | 2.5 mL |
| Purge | .5 mL | 0.5 mL |
| Vent | .25 mL | 0.25 mL |
| Predispense Rate | 1 mL/sec | 0.5 mL/sec |
| Predispense Volume | 1 mL | 0.5 mL |

In the above examples, it is assumed that no fluid is recovered during suckback. It is also assumed that there is a pre-dispense cycle in which a small amount of fluid is dispensed from the dispense chamber. The pre-dispense cycle can be used, for example, to force some fluid through the dispense nozzle to clean the nozzle. According to one embodiment the dispense pump is not recharged between a pre-dispense and a main dispense. In this case:

$$V_D = V_{DPre} + V_{DMain}$$

$V_{DPre}$ = amount of pre-dispense dispense
$V_{DMain}$ = amount of main dispense

Accordingly, the home position of the dispense diaphragm can be set for a volume of 4.5 mL (3 + 1 + 0.5) and the home position of the feed pump can be set to 4.75 mL (3 + 1 + 0.5 + 0.25). With these home positions, dispense pump 180 and feed pump 150 will have sufficient capacity for Recipe 1 or Recipe 2.

According to another embodiment, the home position of the dispense pump or feed pump can change based on the active recipe or a user-defined position. If a user adjusts a recipe to change the maximum volume required by the pump or the pump adjusts for a new active recipe in a dispense operation, say by changing Recipe 2 to require 4 mL of fluid, the dispense pump (or feed pump) can be adjusted manually or automatically. For example, the dispense pump diaphragm position can move to change the capacity of the dispense pump from 3 mL to 4 mL and the extra 1mL of fluid can be added to the dispense pump. If the user specifies a lower volume recipe, say changing Recipe 2 to only require 2.5 mL of fluid, the dispense pump can wait until a dispense is executed and refill to the new lower required capacity.

The home position of the feed pump or dispense pump can also be adjusted to compensate for other issues such as to optimize the effective range of a particular pump. The maximum and minimum ranges for a particular pump diaphragm (e.g., a rolling edge diaphragm, a flat diaphragm or other diaphragm known in the art) can become nonlinear with displacement volume or force to drive the diaphragm because the diaphragm can begin to stretch or compress for example. The home position of a pump can be set to a stressed position for a large fluid capacity or to a lower stress position where the larger fluid capacity is not required. To address issues of stress, the home position of the diaphragm can be adjusted to position the diaphragm in an effective range.

As an example, dispense pump 180 that has a 10 mL capacity may have an effective range between 2 mL and 8 mL. The effective range can be defined as the linear region of a dispense pump where the diaphragm does not experience significant loading. For example, a dispense diaphragm (e.g., dispense diaphragm 190) for a 10 mL pump may have a 6 mL effective range between 2 mL and 8 mL. It should be noted that in these examples, 0 mL home position indicates a diaphragm home position that would cause the dispense pump to have a 10 mL available capacity, and a 10 mL home position would cause the dispense pump to have a 0 mL capacity. In other words, the 0 mL - 10 mL scale refers to the displaced volume.

In some embodiments, the diaphragm of the dispense pump can be set so that the volume of the dispense pump is 5 mL. This provides sufficient volume for a 3 mL dispense process while not requiring use of 0 mL to 2 mL or 8 mL to 10 mL region that causes stress. In this example, the 2 mL volume of the lower-volume less effective region (i.e., the less effective region in which the pump has a lower available volume) is added to the largest $V_{DMax}$ for the pump such that the home position is 3 mL + 2 mL = 5 mL. Thus, the home position can account for the non-stressed effective region of the pump.

As a second example, the dispense pump runs an 8 mL maximum volume dispense process and a 3 mL maximum volume dispense process. In this case, some of the less effective region must be used. Therefore, the diaphragm home position can be set to provide a maximum allowable volume of 8 mL for both processes (i.e., can be set at a position to allow for 8 mL of fluid). In this case, the smaller volume dispense process will occur entirely within the effective range.

In some embodiments, the home position is selected to utilize the lower-volume less effective region (i.e., the less-effective region that occurs when the pump is closer to empty). In other embodiments, the home position can be in the higher-volume less effective region. However, this will mean that part of the lower volume dispense will occur in the less-effective region and, in some instances, there will be some hold-up volume.

As another example, the dispense pump can run a 9 mL maximum volume dispense process and a 4 mL maximum volume dispense process. Again, a portion of the process will occur in the less effective range. The dispense diaphragm, in this example, can be set to a home position of to provide a maximum allowable volume of 9 mL. If, as described above, the same home position is used for each recipe, a portion of the 4 mL dispense process will occur in the less effective range. According to other embodiments, the home position can reset for the smaller dispense process into the effective region.

In the above examples, there is some hold-up volume for the smaller volume dispense processes to prevent use of the less effective region in the pump. The pump can be setup so that the pump only uses the less effective region for larger volume dispense process where flow precision is less critical. These features make it possible to optimize the combination of (i) low volume with higher precision and (ii) high volume with lower precision. The effective range can then be balanced with the desired hold-up volume. A region of the pump may be selected to be more responsive. For example, two dispense cycles my dispense the same volume of fluid and have the same quantity of air in the system, but the dispense cycle with the larger starting volume may be less responsive than the dispense cycle with the smaller starting volume (i.e., the percent change of the second dispense cycle will be greater).

In some embodiments, dispense pump 180 can include a dispense motor 200 with a position sensor (e.g., a rotary encoder). A position sensor can provide feedback of the position of lead screw 195 and, hence, the position of lead screw 195 will correspond to a particular available volume in dispense chamber 185 as the lead screw displaces diaphragm. Consequently, the pump controller can select a position for the lead screw such that the volume in the dispense chamber is at least $V_{DMax}$. The controller can also select a position for the lead screw for a measurement or $\Delta P_{act}$.

According to another embodiment, the home position can be user selected or user programmed. For example, using a graphical user interface or other interface, a user can program a user selected volume that is sufficient to carry out the various dispense processes or active dispense process by the multi-stage pump. According to one embodiment, if the user selected volume is less than $V_{Dispense} + V_{Purge}$, an error can be returned. The pump controller can add an error volume to the user specified volume. For example, if the user selects 5 cc as the user specified volume, pump controller 20 can add 1 cc to account for errors. Thus, pump controller will select a home position for dispense pump 180 that has corresponding available volume of 6 cc.

This can be converted into a corresponding lead screw position that can be stored at pump controller 20 or an onboard controller. Using the feedback from a position sensor, dispense pump 180 can be accurately controlled such that at the end of the filtration cycle, dispense pump 180 is at its home position (i.e., its position having the greatest available volume for the dispense cycle). It should be noted that feed pump 150 can be controlled in a similar manner using a position sensor.

According to another embodiment, dispense pump 180 and/or feed pump 150 can be driven by a stepper motor without a position sensor. Each step or count of a stepper motor will correspond to a particular displacement of the diaphragm. In some embodiments, each count of dispense motor 200 will displace dispense diaphragm 190 a particular amount and therefore displace a particular amount of fluid from dispense chamber 185. If $C_{fullstrokeD}$ is the counts to displace dispense diaphragm from the position in which dispense chamber 185 has its maximum volume (e.g., 20 mL) to 0 mL (i.e., the number of counts to move dispense diaphragm 190 through its maximum range of motion), $C_P$ is the number of counts to displace $V_P$ and $C_D$ is the number of counts to displace $V_D$, then the home position of stepper motor 200 can be:

$$C_{HomeD} = C_{fullstrokeD}-(C_P + C_D + C_{e1})$$

where $C_{e1}$ is a number of counts corresponding to an error volume.

Similarly, if $C_{fullstrokeF}$ is the counts to displace feed diaphragm 160 from the position in which dispense chamber 155 has its maximum volume (e.g., 20 mL) to 0 mL (i.e., the number of counts to move dispense diaphragm 160 through its maximum range of motion), $C_S$ is the number of counts at the feed motor 175 corresponding to $V_{suckback}$ recovered at dispense pump 180 and $C_V$ is the number of counts at feed motor 175 to displace $V_V$, the home position of feed motor 175 can be:

$$C_{HomeF} = C_{fullstrokeF} - (C_P + C_D - C_S + C_{e2})$$

where $C_{e2}$ is a number of counts corresponding to an error volume.

In some embodiments, a multi-stage pump includes a feed stage pump ("feed pump"), a dispense stage pump ("dispense pump"), a filter, an inlet valve and an outlet valve. The inlet valve and the outlet valve can be three-way valves to allow the inlet valve to be used both as an inlet valve and isolation valve and the outlet valve to be used as an outlet valve and purge valve.

A feed pump and a dispense pump can be motor driven pumps (e.g., stepper motors, brushless DC motors or other motor). The motor positions may be indicated by the corresponding amount of fluid available in the fill chamber or dispense chamber of the respective pump. In one example, each pump has a maximum available volume of 20 cc.

In one embodiment, a feed pump may have a motor position that provides for 7 cc of available volume and a dispense pump may have a motor position that provides for 6 cc of available volume. During the dispense segment, the motor of dispense pump can move to displace 5.5 cc of fluid through an outlet valve. The dispense pump can recover 0.5 cc of fluid during a suckback segment. During the purge segment, a dispense pump can displace 1 cc of fluid through an outlet valve. During a purge segment, the motor of a dispense pump can be driven to a hard stop (i.e., to 0 cc of available volume). This can ensure that the motor is backed the appropriate number of steps in subsequent segments.

In a vent segment, the feed pump can push a small amount of fluid through a filter. During the dispense pump delay segment, a feed pump can begin pushing fluid to a dispense pump before the dispense pump recharges. This slightly pressurizes fluid to help fill the dispense pump and prevents negative pressure in the filter. Excess fluid can be purged through the outlet valve.

During a filtration segment, the outlet valve may be closed and fluid can fill the dispense pump. For example, 6 cc of fluid can be moved by the feed pump to the dispense pump. The feed pump can continue to assert pressure on the fluid after the dispense motor has stopped. In one embodiment, there may be approximately 0.5 cc of fluid left in the feed pump. According to one embodiment, the feed pump can be driven to a hard stop (e.g., with 0 cc of available volume). During the fill segment, the feed pump is recharged with fluid and the multi-stage pump returns to the ready segment.

In some embodiments, the purge segment occurs immediately after the suckback segment to bring the dispense pump to a hardstop, rather than after the vent segment. The dispense volume is 5.5 cc, the suckback volume 0.5 cc and purge volume 1 cc. Based on the sequence of segments, the largest volume required by the dispense pump is:

$$V_{DMax}=V_{Dispesne}+V_{Purge}-V_{Suckback}+e_1$$

If a dispense pump utilizes a stepper motor, a specific number of counts will result in a displacement of $V_{DMax}$. By backing the motor from a hardstop position (e.g., 0 counts) the number of counts corresponding to $V_{DMax}$, dispense pump will have an available volume of $V_{DMax}$.

For example, for a feed pump, $V_{Vent}$ may be 0.5 cc, and there is an additional error volume of 0.5 cc to bring the feed pump to a hardstop.

$$V_{FMax}= 5.5 + 1 + 0.5 - 0.5 + 0.5$$

In this example, $V_{FMax}$ is 7 cc. If the feed pump uses a stepper motor, the stepper motor, during the recharge segment can be backed from the hardstop position the number of counts corresponding to 7 cc. In this example, a feed pump utilizes 7 cc of a maximum 20 cc and a feed pump utilizes 6 cc of a maximum 20 cc, thereby saving 27 cc of hold-up volume.

In some embodiments, a user can enter a user defined volume, for example 10.00 mL. An error volume can be added to this (e.g., 1 mL), such that the home position of the dispense pump has a corresponding available volume of 11 mL. In some embodiments, can also select a volume for the feed pump.

Embodiments of the present invention can be implemented, for example, as software programming executable by a computer processor to control the feed pump and dispense pump.

In some embodiments a user enters one or more parameters for a dispense operation, which may include multiple dispense cycles, including, for example, the dispense volume, purge volume, vent volume, user specified volumes for the dispense pump volume and/or feed pump, an air test, and other parameters. The parameters can include parameters for various recipes for different dispense cycles. The pump controller can determine the home position of the dispense pump based on a user specified volume, dispense volume, purge volume or other parameter associated with the dispense cycle. Additionally, the choice of home position can be based on the effective range of motion of the dispense diaphragm. Similarly, the pump controller can determine the feed pump home position.

During a fill segment, the feed pump can be controlled to fill with a process fluid. According to one embodiment, the feed pump can be filled to its maximum capacity. According to another embodiment, the feed pump can be filled to a feed pump home position. During the vent segment the feed pump can be further controlled to vent fluid having a vent volume.

During the filtration segment, the feed pump may be controlled to assert pressure on the process fluid to fill the dispense pump until the dispense pump reaches its home position. The dispense diaphragm in the dispense pump is moved until the dispense pump reaches the home position to partially fill the dispense pump (i.e., to fill the dispense pump to an available volume that is less than the maximum available volume of the dispense pump). If the dispense pump uses a stepper motor, the dispense diaphragm can first be brought to a hard stop and the stepper motor reversed a number of counts corresponding to the dispense pump home position. If the dispense pump uses a position sensor (e.g., a rotary encoder), the position of the diaphragm can be controlled using feedback from the position sensor.

The dispense pump can then be directed to purge a small amount of fluid. The dispense pump can then be controlled to perform an air test. The dispense pump can be further controlled to dispense a predefined amount of fluid (e.g., the dispense volume). The dispense pump can be further controlled to suckback a small amount of fluid or fluid can be removed from a dispense nozzle by another pump, vacuum or other suitable mechanism. It should be noted that steps described herein can be performed in a different order and repeated as needed or desired.

While primarily discussed in terms of a multi-stage pump, embodiments of the present invention can also be utilized in single stage pumps including bag in bottle.

Embodiments disclosed herein may accommodate different recipes, including different dispense volumes, dispense rates, purge volumes, fill rates, vent rates, purge rates, filtration, etc. An air confirmation test may be used to confirm the presence of minute quantities of air for different recipes. Furthermore, air confirmation tests may be performed in systems dispensing various fluids. For example, embodiments may be used to confirm the presence of air in a fluid delivery system dispensing isopropyl alcohol (IPA), 112 centipoise oil (112 cP oil) and Top Antireflective Coating (TARC). Different amounts of air may have different effects on the system or require different protocols upon detection. For example, in an air confirmation test over 20 cycles in which 0.2 mL of air is present in an IPA dispense, the amount of air may trigger an alarm in several dispense cycles, but the trend may indicate air is gradually being purged from the system such that no additional steps are needed. In an air confirmation test in which 0.5 mL of air is present in an IPA dispense, the amount of air may trigger an alarm in the majority of cycles, but may then return to an acceptable level for further operation. In an air confirmation test in which 1.0 mL of air is present, the amount of air may trigger an alarm on the first dispense. In comparison, using the same alarm criteria, a dispense confirmation test may not trigger an alarm if there is only 0.2 mL of air in the system and might signal an alarm fewer than half the cycles if 0.5 mL of air is in the system. As those skilled in the art will appreciate after reading this disclosure, by isolating the system and selecting appropriate alarm levels, embodiments can more accurately detect air in portions of the system including the pump, lines, valves, and other pump or system components, and may be useful for identifying trends related to air in the system.

Embodiments disclosed herein include air confirmation systems and methods that can test for air in different fluids, and in which the tests are repeatable. Furthermore, recipes may be alternated as described above. Embodiments disclosed herein may detect minute amounts of air in a fluid delivery system in instances in which recipes are alternated.

Embodiments disclosed herein may be implemented using suitable software including computer-executable instructions. As one skilled in the art can appreciate, a computer program product implementing an embodiment disclosed herein may comprise one or more non-transitory computer readable storage media storing computer instructions executable by one or more processors in a computing environment. Examples of computer readable media may include, but are not limited to, volatile and non-volatile computer memories and storage devices such as ROM, RAM, HD, direct access storage device arrays, magnetic tapes, floppy diskettes, optical storage devices, etc. The processing may be distributed as needed or desired. As discussed above, a user may navigate through various screens in a user interface to set up and use an air confirmation system.

Although the foregoing specification describes specific embodiments, numerous changes in the details of the embodiments disclosed herein and additional embodiments will be apparent to, and may be made by, persons of ordinary skill in the art having reference to this description. In this context, the specification and figures are to be regarded in an illustrative rather than a restrictive sense, and all such modifications are intended to be included within the scope of the appended claims.

**Claims**

1. A pumping system (5), comprising:

   a pump (10);
   a controller (20) coupled to the pump, the controller having a processor (835) and a non-transitory computer readable medium (827) storing instructions (830) translatable by the processor, the controller configured to:

      control the pump (10) to isolate a portion of the pump (10), the isolated portion of the pump (10) being filled with a liquid, wherein the isolated portion of the pump (10) has a volume;
      bring the isolated portion of the pump (10) to a predefined starting pressure;
      change the volume of the isolated portion of the pump (10) by a known amount;
      measure an ending pressure in the isolated portion of the pump (10);
      determine an actual pressure change between the predefined starting pressure and the ending pressure in the isolated portion of the pump (10); and
      determine if air or gas is present in the isolated portion of the pump (10) utilizing the actual pressure change.

2. The pumping system of claim 1, wherein the pump comprises a dispense chamber (185) and wherein the isolated portion of the pump comprises the dispense chamber; and
   wherein the controller is operable to compare the actual pressure change with an expected pressure change to determine if air or gas is present in the isolated portion of the pump.

3. The pumping system of claim 2, wherein the isolated portion of the pump further comprises a component (25) downstream from the dispense chamber.

4. The pumping system of claim 3, wherein the component comprises a valve downstream from the dispense chamber.

5. The pumping system of claim 4, wherein the controller is operable to close one or more valves (125, 130, 135, 140, 145, 147) in the system to isolate the portion of the pump; and wherein the controller is operable to control the one or more valves to vent the isolated portion of the pump.

6. The pumping system of claim 2, further comprising comparing a difference between the actual pressure change and the expected pressure change to a characterization curve to determine an amount of air or gas present in the isolated portion of the pump.

7. The pumping system of claim 1, wherein a second pressure is a predetermined value, wherein the pump controller is operable to move a diaphragm in the pump a distance and compare the distance with an expected distance to determine if air or gas is present in the isolated portion of the pump; and wherein bringing the isolated portion of the pump to a predefined starting pressure further comprises controlling the pump to move the diaphragm in the pump to a variable home position.

8. A method for detecting air in a pumping system (5), comprising:

   controlling a pump (10) to isolate a portion of the pump (10), the isolated portion of the pump being filled with a liquid, wherein the isolated portion of the pump (10) has a volume;
   bringing the isolated portion of the pump (10) to a predefined starting pressure;
   changing the volume of the isolated portion of the pump (10) by a known amount;
   measuring an ending pressure in the isolated portion of the pump (10);
   determining an actual pressure change between the predefined starting pressure and the ending pressure in the isolated portion of the pump (10); and

determining if air or gas is present in the isolated portion of the pump (10) utilizing the actual pressure change.

9. The method of claim 8, wherein the pump comprises a dispense chamber (185) and wherein the isolated portion of the pump comprises the dispense chamber (185).

10. The method of claim 9, wherein the isolated portion of the pump further comprises a component (25) downstream the dispense chamber.

11. The method of claim 10, wherein the component comprises a valve downstream the dispense chamber; and further comprising closing one or more valves (125,130,135,140,145,147) in the system to isolate the portion of the pump.

12. The method of claim 8, further comprising comparing the pressure change with an expected pressure change and determining the presence of air based on a difference between the actual pressure change and the expected pressure change.

13. The method of claim 12, further comprising comparing a difference between the actual pressure change and the expected pressure change to a characterization curve to determine an amount of air or gas present in the isolated portion of the pump.

14. The method of claim 8, further comprising:

moving a diaphragm in the pump a distance and comparing the distance moved with an expected distance and determining the presence of air based on a difference between the distance moved and the expected distance; controlling the pump to move a piston to a variable home position; and venting the isolated portion of the pump.

15. A computer program product comprising a non-transitory computer readable medium storing a set of instructions translatable by a controller to perform a method according to anyone of claims 8 to 14.

**Patentansprüche**

1. Pumpsystem (5), umfassend
eine Pumpe (10),
eine an die Pumpe gekoppelte Steuerung (20), wobei die Steuerung einen Prozessor (835) und ein nichtflüchtiges computerlesbares Medium (827) umfasst, das von der Steuerung übersetzbare Anweisungen (830) speichert, wobei die Steuerung ausgebildet ist,

die Pumpe (10) zu steuern, um einen Teil der Pumpe (10) zu isolieren, wobei der isolierte Teil der Pumpe (10) mit einer Flüssigkeit gefüllt ist, wobei der isolierte Teil der Pumpe (10) ein Volumen besitzt, den isolierten Teil der Pumpe (10) auf einen vorgegebenen Startdruck zu bringen, das Volumen des isolierten Teils der Pumpe (10) um eine bekannte Menge zu ändern, einen Enddruck in dem isolierten Teil der Pumpe (10) zu bestimmen, eine aktuelle Druckänderung zwischen dem vorgegebenen Startdruck und dem Enddruck in dem isolierten Teil der Pumpe (10) zu bestimmen, und unter Verwendung der aktuellen Druckänderung zu bestimmen, ob Luft oder Gas in dem isolierten Teil der Pumpe (10) vorhanden ist.

2. Pumpsystem nach Anspruch 1, worin die Pumpe eine Abgabekammer (185) umfasst und worin der isolierte Teil der Pumpe die Abgabekammer umfasst, und wobei die Steuerung betrieben werden kann, um die aktuelle Druckänderung mit einer erwarteten Druckänderung zu vergleichen, um zu bestimmen, ob Luft oder Gas in dem isolierten Teil der Pumpe vorhanden ist.

3. Pumpsystem nach Anspruch 2, worin der isolierte Teil der Pumpe weiter eine Komponente (25) stromabwärts der Abgabekammer umfasst.

4. Pumpsystem nach Anspruch 3, worin die Komponente ein Ventil stromabwärts der Abgabekammer umfasst.

**5.** Pumpsystem nach Anspruch 4, worin die Steuerung betrieben werden kann, um ein Ventil oder mehrere Ventile (125, 130, 135, 140, 145, 147) in dem System zu schließen, um den Teil der Pumpe zu isolieren, und wobei die Steuerung betrieben werden kann, das eine Ventil oder die mehreren Ventile zu steuern, um den isolierten Teil der Pumpe zu entlüften.

**6.** Pumpsystem nach Anspruch 2, weiter umfassend das Vergleichen einer Differenz zwischen der aktuellen Druckänderung und der erwarteten Druckänderung mit einer Bestimmungskurve, um eine Menge an in dem isolierten Teil der Pumpe vorhandener Luft oder vorhandenem Gas zu bestimmen.

**7.** Pumpsystem nach Anspruch 1, worin ein zweiter Druck ein vorgegebener Wert ist, wobei die Pumpensteuerung betrieben werden kann, ein Diaphragma in der Pumpe eine Wegstrecke zu bewegen und die Wegstrecke mit einer erwarteten Wegstrecke zu vergleichen, um zu bestimmen, ob Luft oder Gas in dem isolierten Teil der Pumpe vorhanden ist, und wobei das Bringen des isolierten Teils der Pumpe auf einen vorgegebenen Startdruck weiter das Steuern der Pumpe umfasst, um das Diaphragma in der Pumpe auf eine variable Grundposition zu bewegen.

**8.** Verfahren zum Nachweis von Luft in einem Pumpsystem (5) umfassend:

Steuern einer Pumpe (10), um einen Teil der Pumpe (10) zu isolieren, wobei der isolierte Teil der Pumpe mit einer Flüssigkeit gefüllt ist, wobei der isolierte Teil der Pumpe (10) ein Volumen besitzt,
Bringen des isolierten Teils der Pumpe (10) auf einen vorgegebenen Startdruck,
Ändern des Volumens des isolierten Teils der Pumpe (10) um eine bekannte Menge,
Messen eines Enddrucks in dem isolierten Teil der Pumpe (10),
Bestimmen einer aktuellen Druckänderung zwischen dem vorgegebenen Startdruck und dem Enddruck in dem isolierten Teil der Pumpe (10), und,

unter Verwendung der aktuellen Druckänderung, Bestimmen, ob Luft oder Gas in dem isolierten Teil der Pumpe (10) vorhanden ist.

**9.** Verfahren nach Anspruch 8, worin die Pumpe eine Abgabekammer (185) umfasst und worin der isolierte Teil der Pumpe die Abgabekammer (185) umfasst.

**10.** Verfahren nach Anspruch 9, worin der isolierte Teil der Pumpe weiter eine Komponente (25) stromabwärts der Abgabekammer umfasst.

**11.** Verfahren nach Anspruch 10, worin die Komponente ein Ventil stromabwärts der Abgabekammer umfasst und weiter das Schließen des einen Ventils oder der mehreren Ventile (125, 130, 135, 140, 145, 147) in dem System umfasst, um den Teil der Pumpe zu isolieren.

**12.** Verfahren nach Anspruch 8, weiter umfassend das Vergleichen der Druckänderung mit einer erwarteten Druckänderung und Bestimmen der Anwesenheit von Luft auf der Grundlage einer Differenz zwischen der aktuellen Druckänderung und der erwarteten Druckänderung.

**13.** Verfahren nach Anspruch 12, weiter umfassend das Vergleichen einer Differenz zwischen der aktuellen Druckänderung und der erwarteten Druckänderung mit einer Bestimmungskurve, um eine Menge an in dem isolierten Teil der Pumpe vorhandener Luft oder vorhandenem Gas zu bestimmen.

**14.** Verfahren nach Anspruch 8, weiter umfassend:

Bewegen eines Diaphragmas in der Pumpe um eine Wegstrecke und Vergleichen der bewegten Wegstrecke mit einer erwarteten Wegstrecke und Bestimmen der Anwesenheit von Luft auf der Grundlage einer Differenz zwischen der bewegten Wegstrecke und der erwarteten Wegstrecke,
Steuern der Pumpe, um einen Kolben zu einer variablen Grundposition zu bewegen, und
Entlüften des isolierten Teils der Pumpe.

**15.** Computerprogrammprodukt, umfassend ein nichtflüchtiges computerlesbares Medium, das einen Satz von Anweisungen speichert, die von einer Steuerung übersetzbar sind, um ein Verfahren nach einem der Ansprüche 8 bis 14 auszuführen.

**Revendications**

1. Système de pompage (5), comprenant :

   une pompe (10) ;
   un contrôleur (20) couplé à la pompe, le contrôleur ayant un processeur (835) et un support lisible par ordinateur non transitoire (827) stockant des instructions (830) traduisibles par le processeur, le contrôleur étant configuré pour :

   commander la pompe (10) pour isoler une partie de la pompe (10), la partie isolée de la pompe (10) étant remplie d'un liquide, dans lequel la partie isolée de la pompe (10) a un volume ;
   amener la partie isolée de la pompe (10) à une pression de départ prédéfinie ;
   changer le volume de la partie isolée de la pompe (10) d'une quantité connue ;
   mesurer une pression terminale dans la partie isolée de la pompe (10) ;
   déterminer un changement de pression réel entre la pression de départ prédéfinie et la pression terminale dans la partie isolée de la pompe (10) ; et
   déterminer si de l'air ou du gaz est présent dans la partie isolée de la pompe (10) en utilisant le changement de pression réel.

2. Système de pompage selon la revendication 1, dans lequel la pompe comprend une chambre de distribution (185) et dans lequel la partie isolée de la pompe comprend la chambre de distribution ; et
   dans lequel le contrôleur peut être utilisé pour comparer le changement de pression réel avec un changement de pression prévu pour déterminer si de l'air ou du gaz est présent dans la partie isolée de la pompe.

3. Système de pompage selon la revendication 2, dans lequel la partie isolée de la pompe comprend en outre un composant (25) en aval de la chambre de distribution.

4. Système de pompage selon la revendication 3, dans lequel le composant comprend une vanne en aval de la chambre de distribution.

5. Système de pompage selon la revendication 4, dans lequel le contrôleur est utilisable pour fermer une ou plusieurs vannes (125, 130,135, 140, 145, 147) dans le système pour isoler la partie de la pompe ; et dans lequel le contrôleur est utilisable pour commander la ou les vannes pour mettre à l'atmosphère la partie isolée de la pompe.

6. Système de pompage selon la revendication 2, comprenant en outre la comparaison d'une différence entre le changement de pression réel et le changement de pression prévu à une courbe de caractérisation pour déterminer une quantité d'air ou de gaz présente dans la partie isolée de la pompe.

7. Système de pompage selon la revendication 1, dans lequel une deuxième pression est une valeur prédéterminée, dans lequel le contrôleur de pompe est utilisable pour déplacer un diaphragme dans la pompe sur une distance et comparer la distance avec une distance prévue pour déterminer si de l'air ou du gaz est présent dans la partie isolée de la pompe ; et dans lequel la mise de la partie isolée de la pompe à une pression de départ prédéfinie comprend en outre la commande de la pompe pour amener le diaphragme dans la pompe à une position de repos variable.

8. Procédé pour détecter de l'air dans un système de pompage (5), comprenant :

   la commande d'une pompe (10) pour isoler une partie de la pompe (10), la partie isolée de la pompe étant remplie d'un liquide, dans lequel la partie isolée de la pompe (10) a un volume ;
   la mise de la partie isolée de la pompe (10) à une pression de départ prédéfinie ;
   le changement du volume de la partie isolée de la pompe (10) d'une quantité connue ;
   la mesure d'une pression terminale dans la partie isolée de la pompe (10) ;
   la détermination d'un changement de pression réel entre la pression de départ prédéfinie et la pression terminale dans la partie isolée de la pompe (10) ; et
   la détermination de la présence éventuelle d'air ou de gaz dans la partie isolée de la pompe (10) en utilisant le changement de pression réel.

9. Procédé selon la revendication 8, dans lequel la pompe comprend une chambre de distribution (185) et dans lequel la partie isolée de la pompe comprend la chambre de distribution (185).

**10.** Procédé selon la revendication 9, dans lequel la partie isolée de la pompe comprend en outre un composant (25) en aval de la chambre de distribution.

**11.** Procédé selon la revendication 10, dans lequel le composant comprend une vanne en aval de la chambre de distribution ; et comprenant en outre la fermeture d'une ou plusieurs vannes (125, 130, 135, 140, 145, 147) dans le système pour isoler la partie de la pompe.

**12.** Procédé selon la revendication 8, comprenant en outre la comparaison du changement de pression avec un changement de pression prévu et la détermination de la présence d'air en fonction d'une différence entre le changement de pression réel et le changement de pression prévu.

**13.** Procédé selon la revendication 12, comprenant en outre la comparaison d'une différence entre le changement de pression réel et le changement de pression prévu à une courbe de caractérisation pour déterminer une quantité d'air ou de gaz présente dans la partie isolée de la pompe.

**14.** Procédé selon la revendication 8, comprenant en outre :

le déplacement d'un diaphragme dans la pompe sur une distance et la comparaison de la distance de déplacement avec une distance prévue et la détermination de la présence d'air en fonction d'une différence entre la distance du déplacement et la distance prévue ;
la commande de la pompe pour déplacer un piston à une position de repos variable ; et
la mise à l'atmosphère de la partie isolée de la pompe.

**15.** Produit informatique comprenant un support lisible par ordinateur non transitoire stockant un ensemble d'instructions traduisibles par un contrôleur pour exécuter un procédé selon l'une quelconque des revendications 8 à 14.

*FIG. 1*

*FIG. 2*

*FIG. 3*

*FIG. 4*

FIG. 5

FIG. 6

*FIG. 7*

START

900 — NORMALIZE PRESSURE

905 — RECORD STARTING POSITION

910 — PERFORM MOVEMENT TO ENDING PRESSURE

915 — RECORD ENDING POSITION

920 — DETERMINE $m_{act}$

925 — ANALYZE TEST RESULTS

AIR — YES

NO

935 — RETURN SYSTEM TO APPROPRIATE PRESSURE AND CONTINUE DISPENSE PROCESS

930 — ACTION

REPEAT

*FIG. 9*

END

FIG. 8

FIG. 10

9 <15857.9>
10 <14479.0>
11 <13100.0>

1100

**System Air confirmation**

Air detected from cycle 124137: 0.32 mL    1110

| Enable Test: Enable | Error Limit: 1,000 (mL) |
| Enable Alarms: Alarm | Warning Limit: 0.250 (mL) |

1120    1130

**System Air history**

Air detected from cycle 124137: 0.32 mL    ...Newest
Air detected from cycle 124136: 0.33 mL
Air detected from cycle 124135: 0.34 mL
Air detected from cycle 124134: 0.34 mL
Air detected from cycle 124133: 0.32 mL
Air detected from cycle 124132: 0.33 mL
Air detected from cycle 124131: 0.33 mL
Air detected from cycle 124130: 0.36 mL
Air detected from cycle 124129: 0.35 mL
Air detected from cycle 124128: 0.32 mL    ...oldest

*FIG. 11*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2003113440 A1
- WO 2009033106 A2
- WO 2004010474 A2